# EUROPEAN PATENT SPECIFICATION

(11) **EP 2 796 416 B1**
(45) Date of publication and mention of the grant of the patent: **23.11.2016**
(21) Application number: 14165299.0
(22) Date of filing: 18.04.2014
(51) Int. Cl.: C02F 1/28, C02F 1/66, C02F 1/76, B01J 20/34, B01J 20/10, B01J 20/28

(54) **PROCESS FOR REMOVING FLUORINE FROM WATER AND FOR REGENERATING THE FILTRATION MASSES, AND PLANT FOR IMPLEMENTING THE PROCESS**
VERFAHREN ZUR FLUORENTFERNUNG AUS WASSER UND ZUR REGENERIERUNG DER FILTRATIONSMASSEN UND ANLAGE ZUR DURCHFÜHRUNG DES VERFAHRENS
PROCÉDÉ SERVANT À ENLEVER LE FLUOR DANS DE L'EAU ET À RÉGÉNÉRER DES MASSES DE FILTRATION ET INSTALLATION POUR LA MISE EN OEUVRE DE CE PROCÉDÉ

(30) Priority: 22.04.2013 IT VE20130021
(43) Date of publication of application: 29.10.2014
(73) Proprietor: Gruppo Zilio S.P.A., 36022 Cassola (IT)
(72) Inventor: Zilio, Damiano, 36022 Cassola (IT)
(74) Representative: Piovesana, Paolo

(56) References cited:
- GB-A- 734 356
- US-A- 2 380 800
- US-A- 2 553 595
- US-A1- 2005 161 403

## Description

The present invention relates to a process for removing fluorine from water and for regenerating the filtration masses, and a plant for implementing the process.

An object of the invention is to provide a plant for removing fluorine from water which has a modular form and can be used in different configurations.

Another object of the invention is to provide a plant which can be constructed in the workshop and then transported to the site.

GB 734356 relates to a method in which fluorides are extracted from water by first regulating the pH value to between 5.5 and 11, e.g. by bubbling carbon dioxide gas through it and secondly by passing it through a bed of alkaline phosphatic granules.

US 2553595 relates to a process of regenerating the hydroxyapatite of tricalcium phosphate and trimagnesium phosphate for use as fluoride adsorbent reagents.

US 2005/161403 relates to an apparatus and method for removal of arsenic or other metal salts from drinking water. The invention uses a bed of granulated ferric hydroxide to adsorp the metal in a pressurized adsorption chamber.

US 2380800 relates to a treatment of potable water

This object is attained according to the invention by a process for removing fluorine from water and for regenerating the filtration masses, as described in claim 1.

The present invention is further clarified hereinafter by way of a preferred embodiment thereof provided by way of non-limiting example with reference to the accompanying drawings, in which:

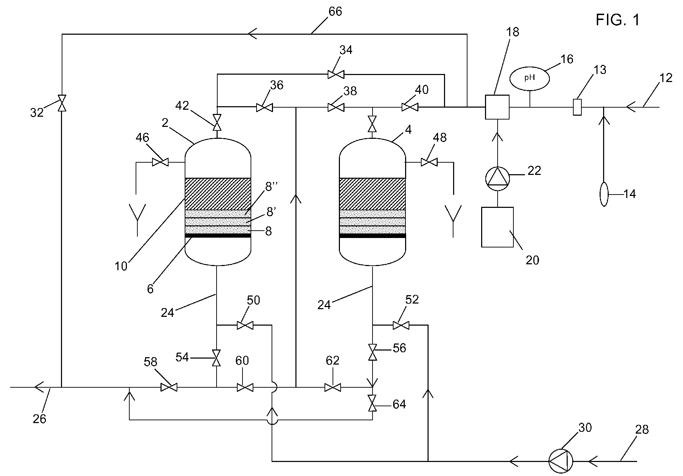

Figure 1 shows a schematic view of a fluorine removal plant according to the invention, and

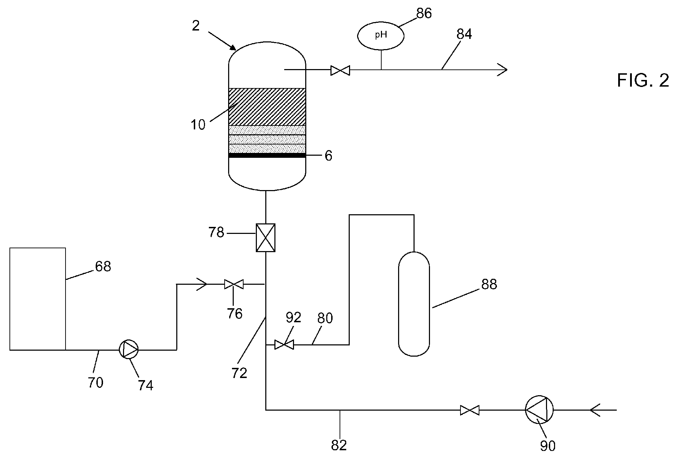

Figure 2 shows a schematic view of a regeneration plant for the filtration masses, applied to the removal plant.
As can be seen from the figures, the fluorine removal plant according to the invention comprises substantially two filters 2, 4 consisting of a cylindrical vessel with lower and upper dishing and provided with a plate 6 comprising a plurality of holes, in each of which a nozzle is mounted provided with thin slits such as to prevent passage of the filtration material. Above the plate 6 three layers of sand respectively 8, 8', 8" of different particle size are disposed, the function of which is to retain any impurities and the filtration material. The filtration material 10 in the form of hydroxyapatite is disposed above the upper sand layer 8".

The plant also comprises a series of feed conduits, vessels containing oxidizing agents, acidifying agents, pumps, metering valves, shut-off valves and other instrumentation, which will be described hereinafter in the description of operation.

If the crude water to be treated flowing through the conduit 12 is not of acid pH, it is acidified by injecting CO₂ contained in a vessel 14 under pressure and mixed in a static mixer 13.

The feed of this CO₂ is controlled by a pH meter 16 such that the CO₂ feed is interrupted on attaining a predetermined pH value. Downstream of the pH meter 16 an injection point 18 is provided for sodium hypochlorite, stored in a vessel 20 and metered by a pump 22, the purpose of which is to disinfect the water and the filtration mass.

The water leaving the injection point 18 is fed to the interior of filters 2 and/or 4 from above, passing firstly through the filtration material 10 and then through the sand layers 8", 8' and 8 until it passes through the slits in the plate 6 to be discharged to the outside via the conduits 24 connected to the water discharge manifold 26.

Since with the passage of time, preferential paths can form within the filtration material 10, with consequent reduction in the filtration efficiency, and since the hydroxyapatite can partly disintegrate to give rise to a very thin fraction which finishes by passing through the sand layers 8, 8', 8", it is preferable to periodically backwash the filters and reclassify the filtration bed. This is achieved by means of water originating from a conduit 28 and fed into the vessels 2 and 4 from below by means of a backwash pump 30 such as to achieve good movement of the mass and carry the thin material fraction upwards, until it is discharged through the valves 46 and 48. As the efficiency of the filtration material is initially very high, it happens that the outgoing fluorine concentration is much lower than that required by regulations. Because of this, in order to prevent the wasteful filtration of large water quantities, a partial bypass valve 32 is provided which by regulating its degree of opening it is possible to mix part of the crude water which has not yet passed through the plant but has passed through the conduit 66, and hence presents a high fluorine concentration, with that water fraction which has passed through one or both of the filters 2 and 4. The degree of opening of the valve 32 is chosen such that the final mixture of the two waters has the desired fluorine content.

This valve 32, and all the valves described in the example, are controlled by a PLC which is also accessible remotely and hence remotely controllable.

The hydraulic construction is such that the plant can operate in various modes according to requirements, these being, with reference to the accompanying scheme:
- filtration in series via filters 2 - 4,
- filtration in series via filters 4 - 2,
- filtration in parallel via filters 2 and 4,
- filtration only via filter 2,
- filtration only via filter 4,
- filtration filter 2 and wash filter 4,
- filtration filter 4 and wash filter 2.

The following table indicates which valves must be opened and which valves must be closed to achieve each of these modes.

| | Valves | | | | | | | | | | | | | | | |
|---|---|---|---|---|---|---|---|---|---|---|---|---|---|---|---|---|
| Mode | 34 | 56 | 62 | 52 | 48 | 42 | 54 | 60 | 50 | 46 | 64 | 58 | 38 | 10 | 30 | 36 |
| Filtration AB | O | O | O | C | C | O | O | C | C | C | C | O | C | O | C | O |
| Filtration BA | O | O | C | C | C | O | O | O | C | C | O | C | O | C | O | C |
| Filtration Parallel AB | O | O | C | C | C | O | O | C | C | C | O | O | C | O | O | C |
| Filtration only A | O | O | C | C | C | C | C | C | C | C | O | C | C | O | C | C |
| Filtration only B | C | C | C | C | C | O | O | C | C | C | C | O | C | C | O | C |
| Filtration A, Wash B | O | O | C | C | C | C | C | C | O | O | O | C | C | O | C | C |
| Filtration B, Wash A | C | C | C | O | O | O | O | C | C | C | C | O | C | C | O | C |

Finally it should be noted that valves, pumps, instruments and reagents can be housed inside a container, such that the plant can be constructed in the workshop and then transported to the site divided into two basic parts, namely: the filters, and all the operating and regulating members within a container.

As the hydroxyapatite is generally able to fix some grams of fluoride per kilogram of filtration mass and the water to be made drinkable contains some milligrams per litre, generally a period of some days is required between one filtration mass regeneration and the next.

Hence regeneration must be carried out on site to minimize the costs of the operation.

For this purpose, a plant for regenerating filtration masses is provided comprising a vessel 68 containing sodium hydroxide with its outlet 70 connected to a conduit 72 by way of a metering pump 74 and a shut-off valve 76.

The conduit 72 communicates at one end with a static mixer 78 and branches at the other end into two conduits 80, 82 respectively.

A conduit 84 incorporating a pH meter 86 extends from the top of the filter 2.

The conduit 80 terminates in a vessel 88 of CO₂, with the conduit 82 being provided with a metering pump 90 which feeds a stream of regeneration water.

The plant according to the invention operates in the following manner.

When the filtration mass has fixed the maximum possible fluorine quantity, the pump 90 feeds along the conduit 82 a water stream to which 0.5-2% of sodium hydroxide has been added originating from vessel 68, these being mixed in the static mixer 78 to be then fed into the filter 2 from the bottom, to regenerate the filtration mass 10.

Although hydroxyapatite shows greater affinity for the fluoride ion than for the hydroxyl of the sodium hydroxide, this latter displaces the fluorides as they are present in solution in a concentration some order of magnitudes less.

The basic regenerating solution rich in fluoride passes through the conduit 84 and is fed to a removal treatment for water containing fluorides.

Once the fluorides have been removed from the filtration mass 10, this must be rinsed as the hydroxyapatite is still wetted with a strongly basic solution and hence the pH of the exit water has a value which is unacceptable for enabling the water to be destined for human consumption.

Hence the valve 76 is closed to effect rinsing with acidulated water originating from the conduit 82, to which CO₂ contained in the vessel 88 has been added by opening the valve 92.

In a modified embodiment, rinsing is achieved with a buffer solution, for example disodiumsuphate/citric acid at pH 7.

Consequently the acidulated water passes through the sand layers and the filtration material 10 to be then fed to effluent treatment through the conduit 84.

At the moment in which the pH meter 86 indicates a pH value of < 8.5 acceptable for potabilization, the filter 2 is returned to the configuration for implementing filtration of water contaminated by fluorides.

## Claims

1. A process for removing fluorine from water and for regenerating the filtration masses, **characterised by**:
- acidifying the crude water to be treated by injecting CO₂,
- adding sodium hypochlorite to protect the hydroxyapatite from the action of microorganisms,
- feeding the water into at least one filter filled with at least one layer of sand and at least one layer of hydroxyapatite,
- discharging the water to the outside,
- washing the interior of said filters by backwashing with water,
- feeding water containing Na(OH) through said filters from their bottom upwards to replace the F⁻ ion with the OH⁻ to restore the absorbent capacity of the hydroxyapatite,
- rinsing with a buffer solution in the form of water acidulated with CO₂ until the water leaving the top of the filter has a pH value equal to that of the buffer.

2. A process as claimed in claim 1, **characterised in that** the treated water leaving the filter (2, 4) is mixed with part of the contaminated water which has not been subjected to treatment.

3. A plant for implementing the process claimed in one of claims from 1 to 2, **characterised by** comprising:
- for the water to be treated, at least one filter (2, 4) filled with at least one layer of sand and at least one layer of hydroxyapatite and being provided with a discharge conduit (26) provided with a closure valve (56),
- for feeding the water to be treated into said filter, a conduit (12) into which a vessel (14) for CO₂ injection is connected at a first point and comprising a second point (18) for sodium hypochlorite injection,
- a conduit (28) for hydroxyapatite reclassification water entering from the base of at least said filter, said conduit (28) being connected to the discharge conduit (26) between the filter lower outlet and the valve (56) and being provided with a shut-off valve (52),
- a water conduit (72) to which a first conduit (70) and a second conduit (80) are connected, the first conduit (70) being connected with a valve (76) for adding sodium hydroxide and the second conduit (80) being provided with a valve (92) for CO₂ feed, these being opened alternatively for regeneration of the filtration masses and for rinsing the filtration masses, said conduit (72) being connected to the bottom of the filter,
- a PLC for controlling the valves.

4. A plant as claimed in claim 3, **characterised by** comprising:
- a conduit (66) connected into the conduit (12) downstream of the two points (14, 18) and upstream of the filter inlet, said conduit being provided with a regulator valve (32), said conduit being connected to the conduit (26),
- regulating means for the valve (32) such as to achieve partial bypassing of the filter,
- means for simultaneously regulating the valves (52, 56) to achieve water reclassification.

5. A plant as claimed in claim 4, **characterised in that** the filters are connected in series.

6. A plant as claimed in claim 4, **characterised in that** the filters are connected in parallel.

## Patentansprüche

1. Verfahren zur Fluorentfernung aus Wasser und zur Regenerierung der Filtrationsmassen, **gekennzeichnet durch**:
- Versauern des zu behandelnden Rohwassers **durch** Injizieren von CO₂,
- Zugeben von Natriumhypochlorit zum Schutz des Hydroxyapatits vor der Wirkung von Mikroorganismen,
- Zuführen des Wassers in mindestens einen Filter, der mit mindestens einer Schicht Sand und mindestens einer Schicht Hydroxyapatit gefüllt ist,
- Ablassen des Wassers nach außen,
- Waschen des Inneren der Filter **durch** Rückspülen mit Wasser,
- Zuführen von Wasser, das Na(OH) enthält, **durch** die Filter von ihrer Unterseite nach oben, um das F⁻-Ion **durch** das OH⁻-Ion zu ersetzen, um das Absorptionsvermögen des Hydroxyapatits wiederherzustellen,
- Ausspülen mit einer Pufferlösung in der Form von mit CO₂ gesäuertem Wasser, bis das an der Oberseite des Filters austretende Wasser einen pH-Wert aufweist, der gleich dem des Puffers ist.

2. Verfahren nach Anspruch 1, **dadurch gekennzeichnet, dass** das behandelte Wasser, das aus dem Filter (2, 4) austritt, mit einem Teil des kontaminierten Wassers gemischt ist, das keiner Behandlung ausgesetzt wurde.

3. Anlage zur Durchführung des Verfahrens nach einem der Ansprüche 1 bis 2, **dadurch gekennzeichnet, dass** sie Folgendes umfasst:
- für das zu behandelnde Wasser mindestens ein Filter (2, 4), das mit mindestens einer Schicht Sand und mindestens einer Schicht Hydroxyapatit gefüllt ist und mit einer Ablassleitung (26) versehen ist, die mit einem Schließventil (56) versehen ist,
- zum Zuführen des zu behandelnden Wassers in das Filter eine Leitung (12), mit der ein Behälter (14) zur CO₂-Injektion an einem ersten Punkt verbunden ist und umfassend einen zweiten Punkt (18) zur Natriumhypochlorit-Injektion,
- eine Leitung (28) für Hydroxyapatit-Umschichtungswasser, das von der Basis mindestens des Filters einströmt, wobei die Leitung (28) zwischen dem unteren Filterauslass und dem Ventil (56) mit der Ablassleitung (26) verbunden ist und mit einem Absperrventil (52) versehen ist,
- eine Wasserleitung (72), mit der eine erste Leitung (70) und eine zweite Leitung (80) verbunden sind, wobei die erste Leitung (70) zur Zugabe von Natriumhydroxid mit einem Ventil (76) verbunden ist und die zweite Leitung (80) zur CO₂-Zuführung mit einem Ventil (92) versehen ist, wobei sie abwechselnd zur Regenerierung der Filtrationsmassen und zum Spülen der Filtrationsmassen geöffnet werden, wobei die Leitung (72) mit der Unterseite des Filters verbunden ist,
- eine SPS zum Steuern der Ventile.

4. Anlage nach Anspruch 3, **dadurch gekennzeichnet, dass** sie Folgendes umfasst:
- eine Leitung (66), die stromabwärts der zwei Punkte (14, 18) und stromaufwärts des Filtereinlasses mit der Leitung (12) verbunden ist, wobei die Leitung mit einem Regelventil (32) versehen ist, wobei die Leitung mit der Leitung (26) verbunden ist,
- Regelmittel für das Ventil (32), sodass eine teilweise Umgehung des Filters erreicht wird,
- Mittel zum gleichzeitigen Regeln der Ventile (52, 56), um Wasserumschichtung zu erreichen.

5. Anlage nach Anspruch 4, **dadurch gekennzeichnet, dass** die Filter in Reihe verbunden sind.

6. Anlage nach Anspruch 4, **dadurch gekennzeichnet, dass** die Filter parallel verbunden sind.

## Revendications

1. Procédé d'élimination du fluor de l'eau et de régénération des masses de filtration, **caractérisé par** :
- l'acidification d'eau brute à traiter par l'injection de CO₂,
- l'ajout d'hypochlorite de sodium pour protéger l'hydroxyapatite contre l'action des microorganismes,
- l'acheminement de l'eau dans au moins un filtre rempli avec au moins une couche de sable et au moins une couche d'hydroxyapatite,
- l'évacuation de l'eau vers l'extérieur,
- le nettoyage de l'intérieur desdits filtres par le biais du lavage à contre-courant avec de l'eau,
- l'acheminement de l'eau contenant du Na(OH) à travers lesdits filtres du bas vers le haut pour remplacer l'ion F⁻ par l'ion OH⁻ pour restaurer la capacité d'absorption de l'hydroxyapatite,
- le rinçage avec une solution tampon sous forme d'eau acidulée avec du CO₂ jusqu'à ce que l'eau quittant la partie supérieure du filtre ait une valeur pH égale à celle du tampon.

2. Procédé selon la revendication 1, **caractérisé en ce que** l'eau traitée quittant le filtre (2, 4) est mélangée à une partie de l'eau contaminée qui n'a pas été soumise au traitement.

3. Installation pour la mise en oeuvre du procédé selon l'une quelconque des revendications 1 à 2, **caractérisée en ce qu'**elle comprend :
- pour l'eau à traiter, au moins un filtre (2, 4) rempli avec au moins une couche de sable et au moins une couche d'hydroxyapatite et comportant un conduit d'évacuation (26) contenant une soupape de fermeture (56),
- pour l'acheminement de l'eau à traiter dans ledit filtre, un conduit (12) dans le-quel un récipient (14) pour l'injection de CO₂ est raccordé à un premier point
et comprenant un second point (18) pour l'injection d'hypochlorite de sodium
- un conduit (28) pour la reclassification de l'hydroxyapatite dans l'eau entrant à partir de la base d'au moins ledit filtre, ledit conduit (28) étant raccordé au conduit d'évacuation (26) entre la sortie inférieure du filtre et la soupape (56) et compor-tant une soupape d'arrêt (52),
- un conduit d'eau (72) auquel un premier conduit (70) et un second conduit (80) sont raccordés, le premier conduit (70) étant raccordé à une soupape (76) pour ajouter de l'hydroxyde de sodium et le second conduit (80) comportant une soupape (92) pour l'acheminement de C02, ces derniers étant ouverts de manière alternative pour la régénération des masses de filtration et pour le rinçage des masses de fil-tration, ledit conduit (72) étant raccordé à la partie inférieure du filtre,
- un automate programmable pour commander les soupapes.

4. Installation selon la revendication 3, **caractérisée en ce qu'**elle comprend :
- un conduit (66) raccordé dans le conduit (12) en aval des deux points (14, 18) et en amont de l'entrée de filtre, ledit conduit comportant une soupape de régulateur (32), ledit conduit étant raccordé au conduit (26),
- des moyens de régulation pour la soupape (32) de façon à atteindre un contournement partiel du filtre,
- des moyens pour réguler simultanément les soupapes (52, 56) afin d'obtenir une reclassification de l'eau.

5. Installation selon la revendication 4, **caractérisée en ce que** les filtres sont raccordés en série.

6. Installation selon la revendication 4, **caractérisée en ce que** les filtres sont raccordés en parallèle.
